# FASCICULE DE BREVET EUROPEEN

(11) **EP 4 288 671 B1**
(45) Date de publication et mention de la délivrance du brevet: **01.01.2025**
(21) Numéro de dépôt: 22703010.3
(22) Date de dépôt: 04.01.2022
(51) Int. Cl.: F16B 5/02, B60B 3/16, F16B 43/02, F16B 39/24

(54) **ORGANE DE FIXATION D'UNE ROUE EN APPLICATION AXIALE CONTRE LE MOYEU D'UN ESSIEU DE VEHICULE AUTOMOBILE**
ELEMENT ZUR AXIALEN BEFESTIGUNG EINES RADES AN DER NABE EINER KRAFTFAHRZEUGACHSE
MEMBER FOR AXIALLY ATTACHING A WHEEL TO THE HUB OF A MOTOR VEHICLE AXLE

(30) Priorité: 02.02.2021 FR 2100987
(43) Date de publication de la demande: 13.12.2023
(73) Titulaire: Stellantis Auto SAS, 78300 Poissy (FR)
(72) Inventeur: PEREIRA, Alexandre, 38210 Tullins (FR); BELON, Pierre Gilles, 68740 Munchhouse (FR); LE GUYADER, Gael, 28130 St Martin-de-Nigelles (FR); DELCHER, Christophe, 42240 Unieux (FR); PERRIER, Alexandre, 42000 Saint-Etienne (FR)
(74) Mandataire: BCIP
(86) Numéro de dépôt international: PCT/FR2022/050005
(87) Numéro de publication internationale: WO 2022/167734

(56) Documents cités:
- EP-B1- 1 529 969
- FR-A1- 2 210 515
- JP-B2- 6 681 312
- US-A- 2 844 409
- US-A- 3 560 052
- US-B2- 8 939 694

## Description

La présente invention revendique la priorité de la demande française N°2100987 déposée le 02.02.2021.

### Domaine technique de l'invention

L'invention relève du domaine des organes de fixation agencés pour le serrage d'une roue en application axiale contre un moyeu configuré pour être monté sur un essieu de véhicule automobile. Un tel moyeu est par exemple du type muni d'un disque de frein ou agencé en tambour. Plus spécifiquement, l'invention concerne un tel organe de fixation comprenant une vis et une bague confortant l'efficacité, la qualité et la pérennité du serrage de la roue sur le moyeu, à un seuil de consigne prédéfini de serrage reproductible.

### Art antérieur

Les véhicules automobiles sont classiquement munis de roues pour leur roulage sur une voie de circulation. Les roues comportent une jante autour de laquelle est installé un pneumatique et sont individuellement montées sur un essieu du véhicule via un moyeu d'entraînement de la roue en rotation. Le moyeu est par exemple du type muni d'un disque de frein ou agencée en tambour, la jante étant alors vissée en application axiale contre le moyeu.

Pour maintenir la roue en position sur le moyeu, la jante est serrée axialement contre le moyeu au moyen d'une pluralité d'organes de fixation d'extension axiale qui sont de même agencement et qui sont angulairement répartis autour de l'axe de rotation de la roue. Un tel organe de fixation comprend essentiellement une vis qui comporte à son extrémité proximale une tête pourvue d'un organe d'entraînement en rotation de la vis et à son extrémité distale un filetage pour sa fixation au moyeu par vissage axial.

Les notions proximale et distale utilisées ici et par la suite sont des notions relatives appréciées suivant l'axe d'extension général d'un dit organe de fixation et/ou de l'axe de rotation du moyeu et donc de la jante fixée au moyeu via les organes de fixation, par rapport à la position de la tête de la vis qui est située à l'extrémité proximale de l'organe de fixation.

Pour le montage de la roue sur le moyeu, la jante est installée en position de centrage sur le moyeu. Les vis des divers organes de fixation sont alors respectivement introduites par glissement axial à travers des alésages à face lisse que comporte la jante, puis sont vissées à l'intérieur d'alésages taraudés que comporte le moyeu. Les vis sont ainsi successivement serrées contre la jante selon un ordre prédéfini, jusqu'au serrage axial de la jante contre le moyeu par application des têtes de vis contre la jante. Par suite du couple de serrage exercé par les vis contre la jante, chacune des vis exerce une force axiale de serrage de la jante contre le moyeu, ce qui finalement maintient la roue fixée au moyeu.

Pour fiabiliser le serrage de la roue au moyeu, il est nécessaire de certifier un centrage correct de chacune des vis par rapport à la jante et au moyeu, et d'interdire un desserrage spontané des vis par suite des contraintes qu'elles subissent lors du roulage du véhicule. De telles contraintes résultent notamment des charges multidirectionnelles que supportent cycliquement les vis lors de la progression du véhicule, qui sont particulièrement importantes en phase de prise de virage et/ou de freinage par le véhicule.

Il apparaît cependant qu'un centrage des vis sur le moyeu et/ou une interdiction de desserrage des vis sont délicats à obtenir. Ceci en raison d'un jeu de montage radial ménagé entre la vis et la jante, en raison d'un fréquent flambage de la vis lors du serrage de la jante en application axiale contre le moyeu et/ou en raison des efforts de traction subis par la vis qui sont hétérogènes suivant son extension axiale.

Le montage coaxial des vis à l'intérieur des alésages taraudés que comporte le moyeu est aussi délicat à obtenir, sinon à prévoir des jeux de montage renforçant alors un risque de desserrage des vis. En outre, il est fréquent que l'effort de serrage et/ou les coefficients de frottement entre les surfaces axialement en contact ne soient pas maîtrisés.

Pour conforter le centrage des vis à l'intérieur du moyeu et éviter leur desserrage, il est a été proposé de munir chacun des organes de fixation d'une bague de forme élastiquement déformable qui est interposée en appui axial entre la tête de la vis et la jante de la roue, tel qu'il ressort par exemple du document EP1529969-B1 (AGRATIA SPA).

Selon ce document, la tête de la vis prend axialement appui contre la bague via une surface à portée conique et la bague prend appui contre la jante via une surface à portée hémisphérique. Ceci permet de conforter le centrage de la vis à l'intérieur du moyeu. En outre la bague présente une élasticité lui conférant un agencement en ressort, ce qui conforte une prise d'appui axiale des filets de la vis contre ceux de l'alésage taraudé que comporte le moyeu pour pallier à un potentiel desserrage de la vis lors du roulage du véhicule.

Cependant une telle solution mérite d'être améliorée, notamment au regard de la qualité du serrage obtenu de la jante contre le moyeu. Il est à veiller que les conditions de serrage de la jante contre le moyeu soit pérenne en garantissant qu'un dévissage des vis ne puisse se produire sous l'effet des charges qu'elles supportent lors du roulage du véhicule. Il est aussi opportun de garantir que la fixation de la roue au moyeu via l'ensemble des vis soit homogène à un seuil de consigne prédéfini de serrage pouvant être reproduit pour chacune des vis.

Il est aussi utile que la qualité du serrage de la jante contre le moyeu ne soit pas assujettie au matériau de la jante, ou autrement dit que les modalités de fixation de la roue au moyeu via les organes de fixation soient compatibles avec une jante d'un quelconque matériau métallique, et cela sans affecter la qualité de la prise d'appui des organes de fixation contre la jante à un seuil de consigne prédéfini de serrage.

### Présentation de l'invention

Sur la base du constat qui vient d'être fait, l'invention vise à pallier les insuffisances de l'état de la technique au moins au regard des difficultés à surmonter précédemment visées.

Pour ce faire l'invention propose un organe de fixation d'une roue en application axiale contre le moyeu d'un essieu de véhicule automobile. A titre indicatif non restrictif, ledit moyeu peut être du type muni d'un disque de frein ou être agencé en tambour par exemple.

L'organe de fixation proposé par l'invention est du type comprenant une vis munie d'une tête de prise d'appui axial contre une bague configurée pour prendre elle-même axialement appui contre la jante de la roue par suite du vissage de la vis à l'intérieur d'un alésage taraudé que comporte le moyeu.

Il est essentiellement recherché par l'invention de proposer un tel organe de fixation procurant un serrage de la jante de la roue en appui axial contre le moyeu qui soit ferme

sans affecter un centrage correct de la vis sur le moyeu, qui soit homogène et reproductible à un seuil de serrage prédéfini de la jante contre le moyeu par une pluralité de tels organes de fixation identiques qui sont angulairement répartis autour de l'axe de rotation du moyeu, et/ou qui puisse être utilisé quel que soit le matériau de la jante sans affecter la qualité de leur prise d'appui axiale l'une contre l'autre.

Il est plus spécifiquement recherché :
- ) de compenser au mieux lors du serrage de la roue sur le moyeu, une flexion initiale des vis que comportent lesdits organes de fixation conjointement utilisés pour la fixation de la jante au moyeu, et/ou
- ) de procurer un rattrapage des jeux de montage entre les éléments qui sont successivement empilés axialement lors du serrage de la roue sur le moyeu par les organes de fixation, notamment la tête de vis, la bague, la jante et le moyeu, et/ou
- ) d'éviter un risque de dévissage spontané des vis que comportent les organes de fixation de la roue au moyeu, notamment en évitant un glissement des surfaces en contact les unes entre les autres par suite du serrage de la jante au moyeu et/ou lors du roulage du véhicule,
- ) de garantir une maîtrise de l'effort de serrage à fournir à un seuil de consigne prédéfini de serrage des vis des organes de fixation, en favorisant un assemblage par adhérence entre elles des surfaces en contact les unes entre les autres par suite du serrage de la jante au moyeu,
- ) de pourvoir contrôler l'obtention d'un serrage élastique de la jante contre le moyeu, au moins par mise sous tension axiale élastique des vis, et cela sans affecter leur centrage à l'intérieur du moyeu et/ou sans porter atteinte au coefficient de frottement obtenu entre les surfaces mises successivement en contact axial les unes contre les autres.

Il est à relever qu'une telle recherche s'inscrit en outre sous contrainte d'une réduction des coûts liés à la mise en oeuvre de l'invention, dans le contexte d'une concurrence économique sévère dans le domaine automobile.

Pour ce faire, l'invention propose un dit organe de fixation en ménageant une prise d'appui en rotule de la tête de vis contre la bague et une prise d'appui conique de la bague contre la jante.

La prise d'appui en rotule de la tête de vis sur la bague permet de centrer au mieux la vis par rapport au moyeu auquel elle est vissée - via leurs surfaces de contact autorisant une mobilité multidirectionnelle de la vis par rapport à la jante et au moyeu - et par suite de limiter une mise en flexion significative de la vis assemblée au moyeu. Un tel résultat est simultanément obtenu en interdisant sous l'effet du serrage de la jante en application axiale contre le moyeu, une mobilité relative entre la bague et la jante susceptible de dégrader le coefficient de frottement entre leurs surfaces de contact. La bague est structurellement agencée en un organe robuste indéformable sous l'effet du serrage opéré à un seuil de consigne pouvant être prédéfini à minima.

Ceci procure une prise d'appui axiale à portée conique ferme de la bague contre la jante, et le serrage opéré audit seuil de consigne est reproductible pour l'ensemble des organes de fixation utilisés pour fixer la roue. Il peut aussi être mis à profit lors du serrage de la jante contre le moyeu, une déformation élastique de la jante par la bague pour conforter - à partir d'une déformation élastique localisée de la jante par les bagues - un serrage élastique de la jante contre le moyeu qui est au moins obtenu par une extension axiale élastique de la vis placée sous contrainte axiale.

La jante peut être issue d'un quelconque matériau métallique tout en maintenant constantes les surfaces en contact entre la bague et la jante. Les conséquences liées au frottement entre la bague et la jante sont limitées de part leur prise d'appui axiale l'une contre l'autre via des surfaces de contact à portée conique qui sont constantes et par suite qui favorisent un coefficient de frottement constant entre la bague et la jante. De telles conditions d'application ferme et statique de la bague contre la jante, permettent aussi de limiter une infiltration d'humidité entre elles et ainsi de limiter une corrosion de la jante.

Dans le cas d'une jante - en acier par exemple - susceptible d'être déformée localement par la bague par suite de l'effort de serrage exercé par la vis, non seulement une telle déformation n'affecte pas l'étendue des surfaces de contact entre la bague et la jante mais aussi conforte par élasticité la prise d'appui des filets de la vis à l'intérieur de l'alésage taraudé du moyeu qui la reçoit.

En outre, la prise d'appui ferme et statique à portée conique de la bague contre la jante peut être définie de manière à optimiser la génération d'une composante de poussée axiale de la jante en application contre le moyeu. Ceci permet de générer un effort de serrage axial suffisamment efficace pour maintenir la jante contre le moyeu, tout en permettant de réduire l'effort de serrage à générer au seuil de consigne - reproductible pour l'ensemble des organes de fixation utilisés pour fixer la roue au moyeu - sans risque de desserrage. La mise sous tension axiale de la vis peut alors être limitée, ce qui restreint une mise en flexion significative de la vis par suite d'une hétérogénéité des contraintes supportées par ses filets.

Par ailleurs concernant les surfaces de contact entre la tête de vis et la bague, leur conformation est agencée en calotte sphérique ce qui facilite l'application correcte en atelier d'un traitement et/ou d'un revêtement de ces surfaces, tel qu'un zingage par exemple, confortant la pérennité obtenue du coefficient de frottement des surfaces entre elles. Une mobilité de la vis par rapport à la bague pour son centrage à l'intérieur du moyeu n'affecte pas la conservation des surfaces de contact constantes entre la tête de vis et la bague, et donc n'affecte pas la conservation du coefficient de frottement entre les surfaces de contact de la bague et de la jante.

En outre ceci permet de limiter l'extension axiale de la bague en direction de la tête de vis, sans affecter le débattement en rotule recherché de la vis pour son centrage. Ceci permet d'éviter un débordement de la bague vers un organe d'entraînement en rotation de la vis ménagée à son extrémité proximale, qui peut dès lors être formé en périphérie de la tête de vis pour faciliter sa manoeuvre en rotation par un opérateur.

A ce titre, un organe de fixation conforme à l'invention est agencé pour le serrage d'une jante de roue sur un moyeu de véhicule automobile. L'organe de fixation d'extension globalement axiale comprend une vis munie d'une tête de prise d'appui axial contre une bague enfilée autour d'une face lisse d'une tige de la vis. La dite face lisse est prolongée axialement par un filetage extérieur de ladite tige de vis s'étendant à son extrémité distale. Les faces axialement opposées de la bague présentant à l'une de ses dites faces une conformation partiellement sphérique et à l'autre de ses dites faces une conformation conique.

Selon l'invention, la face distale de la tête de vis est agencée en une calotte sphérique coopérante par emboîtement avec une calotte sphérique de forme complémentaire que comporte la bague à sa face proximale. La face de conformation conique de la bague est ménagée à sa face distale en formant un organe d'emboîtement à portée conique.

De préférence, la calotte sphérique de la tête de vis est une calotte sphérique mâle coopérante par emboîtement avec la calotte sphérique de la bague qui est une calotte sphérique femelle. De préférence encore, la face de conformation conique de la bague est ménagée en périphérie de la face distale de la bague en formant un organe d'emboîtement mâle.

Le matériau de la bague est un matériau métallique qui peut être indifféremment choisi parmi un quelconque matériau métallique, dont par exemple l'acier ou l'aluminium. La bague présente une structure robuste indéformable, étant comprit sous l'effet d'un effort de serrage axial de la jante contre le moyeu par l'organe de fixation qui est conforme à un seuil de consigne prédéfini de serrage de la jante au moyeu.

D'autres caractéristiques de l'organe de fixation relevant de l'invention tel qu'il vient d'être défini sont exposées ci-après.

La génératrice de la face de conformation conique de la bague est avantageusement orientée sensiblement parallèlement à la génératrice de la calotte sphérique ménagée à la face proximale de la bague.

L'extension axiale de la calotte sphérique que comporte la bague est de préférence au plus égale à l'extension axiale de la calotte sphérique que comporte la tête de vis.

La calotte sphérique que comporte la tête de vis est avantageusement axialement prolongée vers son extrémité proximale par un organe d'entraînement mâle en rotation de la vis. Selon une variante, ledit organe d'entraînement peut-être un organe femelle.

De préférence, l'extrémité proximale de la calotte sphérique mâle que comporte la tête de vis affleure ladite face lisse de la tige de vis autour de laquelle en enfilée la bague.

L'invention a aussi pour objet un véhicule automobile qui est classiquement muni de roues chacune fixées à des moyeux respectifs via une pluralité d'organes de fixation qui sont angulairement répartis autour de l'axe de rotation du moyeu. Les moyeux sont notamment agencés pour permettre un serrage axial de la jante contre le moyeu via les organes de fixation, en pouvant être d'un quelconque type tels qu'un moyeu pourvu d'un disque de frein ou agencé en tambour par exemple.

Les organes de fixation comprennent chacun une vis autour de laquelle est enfilée une bague prenant axialement appui contre une jante que comporte la roue. Les vis respectives des organes de fixation traversent la jante via des alésages qu'elle comporte et sont vissées au moyeu en appliquant les bagues contre la jante par serrage axial.

Un tel véhicule automobile relevant de l'invention est principalement reconnaissable en ce que lesdits organes de fixation sont chacun conforme à un organe de fixation de l'invention tel qu'il vient d'être décrit.

Plus spécifiquement, les calottes sphériques que comporte les têtes de vis des organes de fixation sont au moins en partie logées à l'intérieur des calottes sphériques des bagues. Les faces de conformation conique que comportent les bagues sont logées par emboîtement à l'intérieur d'alvéoles respectives que comporte la jante et qui présentent au moins une conformation conique de forme complémentaire à la conformation conique de la bague.

Le matériau de la jante est notamment un matériau métallique indifféremment choisi parmi un quelconque matériau métallique, dont par exemple l'acier ou l'aluminium.

### Présentation des figures

L'invention sera mieux comprise à la lecture de la description détaillée qui suit d'un exemple de réalisation, en relation avec les figures suivantes des planches annexées :
[Fig. 1] La figure 1 est une représentation schématique en vue axiale d'un organe de fixation relevant d'un exemple de réalisation de l'invention, illustré en position de serrage d'une roue de véhicule automobile contre un moyeu équipant un essieu du véhicule.
[Fig. 2] La figure 2 est une représentation en vue axiale éclatée de l'organe de fixation représenté sur la figure 1.
[Fig. 3] La figure 3 est une représentation en vue axiale assemblée de l'organe de fixation représenté sur la figure 2.

### Description détaillée de l'invention

Les figures et leurs descriptions détaillées non limitatives, exposent l'invention selon des modalités particulières qui ne sont pas restrictives quant à la portée de l'invention. Les figures et leurs descriptions détaillées d'un exemple de réalisation de l'invention peuvent servir à mieux la définir, si besoin en relation avec la description générale qui vient d'en être faite. Par ailleurs pour éviter une surcharge des figures et ainsi faciliter leur lecture, les numéros de référence affectés aux termes et/ou aux notions utilisés pour décrire l'invention et indiqués sur l'une quelconque des figures, sont potentiellement repris dans la description d'une quelconque autre figure sans impliquer leur présence sur l'ensemble des figures.

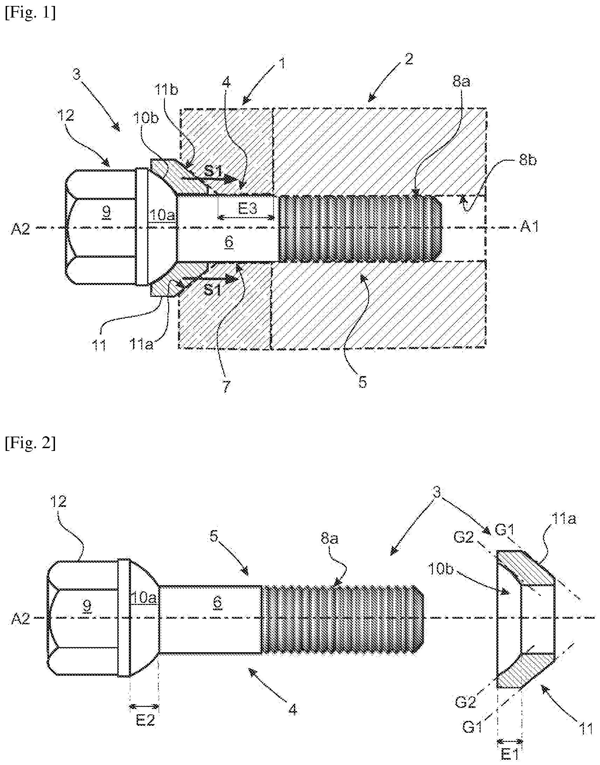

Sur la figure 1, une jante 1 d'une roue est montée sur un moyeu 2 équipant un essieu de véhicule automobile pour l'entraînement en rotation de la roue. A titre d'exemple, le moyeu 2 peut être formé d'un moyeu pourvu d'un disque de frein ou être agencé en tambour.

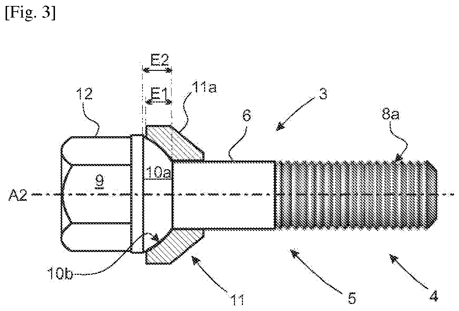

La jante 1 est fixée au moyeu 2 via une pluralité d'organes de fixation 3 qui sont angulairement répartis autour de l'axe A1 de rotation du moyeu 2 et par suite autour de l'axe de rotation de la jante 1 montée et fixée coaxiale au moyeu 2. Chacun des organes de fixation 3 est agencé conformément à l'organe de fixation 3 représenté sur les figures 1 à 3 et relevant d'un exemple de réalisation de l'invention.

Comme illustré sur la figure 1, la jante 1 est fixée au moyeu 2 par boulonnage axial. Les organes de fixation 3 exercent à cet effet un effort de serrage S 1 axial de la jante 1 en application axiale contre le moyeu 2, conformément à un seuil de consigne de serrage prédéfini. L'organe de fixation 3 représenté comprend une vis 4 d'extension axiale A2 comportant une tête 12 prolongée par une tige 5.

La tige 5 de vis 4 comporte un tronçon proximal dont la périphérie présente une face lisse 6. Le tronçon proximal de la tige 5 de vis 4 traverse par glissement un alésage 7 à face lisse que comporte la jante 1. La face lisse 6 de la tige 5 de vis 4 est prolongée par un tronçon distal comportant un filetage extérieur 8a qui coopère par vissage avec un alésage taraudé 8b ménagé dans le moyeu 2.

Comme représenté sur les figures 1 à 3, la tête 12 de vis 4 comporte à son extrémité proximale un organe d'entraînement 9 mâle en rotation de la vis 4, qui est agencé en polygone dont les faces sont ménagées en périphérie de la vis 4. L'organe d'entraînement 9 est prolongé à son extrémité distale d'une calotte sphérique mâle 10a qui s'étend depuis l'organe d'entraînement 9 vers la face lisse 6 de la tige 5 que la calotte sphérique mâle 10a affleure.

L'organe de fixation 3 comprend aussi une bague 11 qui est enfilée autour de la face lisse 6 de la tige 5 de vis 4 et qui prend axialement appui contre la jante 1. La bague 11 est formée à partir d'un quelconque matériau métallique, tel que l'acier ou l'aluminium par exemple. La bague 11 est structurellement robuste en faisant obstacle à sa déformation lors du serrage de la jante 1 contre moyeu 2 audit seuil de consigne.

La bague 11 comporte à son extrémité proximale une face proximale conformée en calotte sphérique 10b femelle. L'extension axiale E1 de la calotte sphérique femelle 10b de la bague 11 est au plus égale à l'extension axiale E2 de la calotte sphérique mâle 10a ménagée à l'extrémité distale de l'organe d'entraînement 9. Ceci permet d'éviter un recouvrement de l'organe d'entraînement 9 par la bague 11 et ainsi de faciliter la manoeuvre de la vis 4 en rotation par un opérateur via un organe d'entraînement 9 mâle.

La bague 11 comporte à son extrémité distale une face distale de conformation conique 11a - plus spécifiquement de conformation tronconique. Un faible jeu radial est ménagé entre la bague 11 et la tige 5 de vis 4 en autorisant sa mise en mobilité par rapport à la bague 11 maintenue immobile, afin de favoriser le centrage de la vis 4 à l'intérieur du moyeu 2 sans affecter la prise d'appui ferme de la bague 11 contre la jante 1. Selon l'exemple illustré, la génératrice G1 de la face de conformation conique 11a de la bague 11 est orientée sensiblement parallèlement à la génératrice G2 de la calotte sphérique femelle 10b que comporte la bague 11.

La face de conformation conique 11a de la bague 11 est au moins en partie logée à l'intérieur d'une alvéole 11b que comporte la jante 1. L'alvéole 11a présente une conformation conique complémentaire à celle de la bague 11, de sorte que la face de conformation conique 11a de la bague 11 prenne fermement axialement appui contre la jante 1 lors de son serrage contre le moyeu 2.

Lors du vissage de la vis 4 progressivement à l'intérieur du moyeu 2, un éventuel défaut de centrage de la vis 4 par rapport au moyeu 2 est spontanément corrigé par flottement de la tête 12 de vis 4 à l'intérieur de la bague 11, jusqu'au serrage S1 effectif audit seuil de consigne de la jante 1 contre le moyeu 2. Sous de telles conditions de serrage, la bague 11 indéformable prend axialement appui contre la jante 1 via l'emboîtement à portée conique ménagé entre eux. Une mobilité relative entre la bague 11 et la jante 1 est ainsi interdite pour éviter une variation du coefficient de frottement entre la bague 11 et la jante 1 lors du roulage du véhicule.

Les matériaux dont sont issus respectivement la bague 11 et la jante 1 peuvent être choisis indifféremment l'un de l'autre, ce qui permet de maîtriser le coefficient de frottement entre elles. L'épaisseur E3 de la jante 1 axialement considérée dans les zones de serrage de la roue au véhicule étant réduite en raison de la présence des alvéoles 11b, une élasticité intrinsèque de la jante 1 peut être mise à profit lors de son serrage pour provoquer sa déformation sous l'effet des efforts exercés par les bagues 11.

Une telle déformation élastique localisée par écrasement de la jante 1 par les bagues 11 n'affecte pas l'étendue des surfaces de prise de contact entre les bagues 11 et la jante 1, ni le centrage à l'intérieur du moyeu 2 des vis 4 qui sont montées mobiles en rotule par rapport à la bague 11. Une telle déformation élastique de la jante 1 permet de compléter une extension élastique des vis 4 placées sous contrainte axiale lors du serrage de la jante contre le moyeu, pour conforter une prise d'appui ferme des filets des vis 4 contre ceux des alésages taraudés 8b ménagés dans le moyeu 2. Ceci permet finalement d'éviter un desserrage des vis 4 par suite d'une prise d'appui robuste des bagues 11 contre la jante 1, et cela sans affecter le centrage des vis 4 à l'intérieur du moyeu 2.

Le dimensionnement et/ou la géométrie de l'organe de fixation 3 permet d'ajuster au mieux son encombrement tant diamétralement qu'axialement. Ceci facilite l'adaptation de l'organe de fixation 3 selon l'agencement et/ou le dimensionnement de la jante 1 dans les zones de serrage de la roue au véhicule et/ou selon le type de vis 4 équipant l'organe de fixation 3.

La robustesse de la bague 11 et la limitation de l'effort de serrage S1 n'affectent pas le maintien en conformation de la bague 11 serrée entre la tête 12 de vis 4 et la jante 1, et permet de réduire les contraintes axiales supportées par la vis 4 sans risque de desserrage. Le serrage de la jante 1 contre le moyeu 2 par l'ensemble des organes de fixation 3 est homogène, le serrage réalisé via les vis 4 de chacun des organes de fixation audit seuil de consigne étant reproductible par un opérateur pour chacun des organes de fixation 3.

## Revendications

1. Organe de fixation (3) agencé pour le serrage (S1) d'une jante (1) de roue sur un moyeu (2) de véhicule automobile, l'organe de fixation (3) d'extension globalement axiale (A2) comprenant une vis (4) munie d'une tête (12) de prise d'appui axial contre une bague (11) enfilée autour d'une face lisse (6) d'une tige (5) de la vis (4), ladite face lisse étant prolongée axialement par un filetage (8a) extérieur de ladite tige (5) de vis (4) s'étendant à son extrémité distale, les faces axialement opposées de la bague (11) présentant à l'une de ses dites faces une conformation partiellement sphérique et à l'autre de ses dites faces une conformation conique, **caractérisé en ce que** la face distale de la tête (12) de vis (4) est agencée en une calotte sphérique (10a) coopérante par emboîtement avec une calotte sphérique (10b) de forme complémentaire que comporte la bague (11) à sa face proximale, la face de conformation conique (11a) de la bague (11) étant ménagée à sa face distale en formant un organe d'emboîtement à portée conique.

2. Organe de fixation (3) selon la revendication 1, **caractérisé en ce que** :
- ) la calotte sphérique (10a) de la tête (12) de vis (4) est une calotte sphérique mâle coopérante par emboîtement avec la calotte sphérique (10b) de la bague (11) qui est une calotte sphérique femelle, et
- ) la face de conformation conique (11a) de la bague (11) est ménagée en périphérie de la face distale de la bague (11) en formant un organe d'emboîtement mâle.

3. Organe de fixation (3) selon l'une quelconque des revendications précédentes, **caractérisé en ce que** le matériau de la bague (11) est un matériau métallique indifféremment choisi parmi un quelconque matériau métallique.

4. Organe de fixation (3) selon l'une quelconque des revendications précédentes, **caractérisé en ce que** la génératrice (G1) de la face de conformation conique (11a) de la bague (11) est orientée sensiblement parallèlement à la génératrice (G2) de la calotte sphérique (10b) ménagée à la face proximale de la bague (11).

5. Organe de fixation (3) selon l'une quelconque des revendications précédentes, **caractérisé en ce que** l'extension axiale (E1) de la calotte sphérique (10b) que comporte la bague (11) est au plus égale à l'extension axiale (E2) de la calotte sphérique (10a) que comporte la tête (12) de vis (4).

6. Organe de fixation (3) selon l'une quelconque des revendications 2 à 5, **caractérisé en ce que** la calotte sphérique (10a) mâle que comporte la tête (12) de vis (4) est axialement prolongée vers son extrémité proximale par un organe d'entraînement (9) mâle en rotation de la vis (4).

7. Organe de fixation (3) selon la revendication 2 ou selon l'une quelconque des revendications 3 à 6 prisent dans la dépendance de la revendication 2, **caractérisé en ce que** l'extrémité proximale de la calotte sphérique (10a) mâle que comporte la tête (12) de vis (4) affleure ladite face lisse (6) de la tige (5) de vis (4) autour de laquelle en enfilée la bague (11).

8. Véhicule automobile muni de roues chacune fixées à des moyeux (2) respectifs via une pluralité d'organes de fixation (3) qui sont angulairement répartis autour de l'axe de rotation du moyeu (2), les organes de fixation (3) comprenant chacun une vis (4) autour de laquelle est enfilée une bague (11) prenant axialement appui contre une jante (1) que comporte la roue, les vis (4) respectives des organes de fixation (3) traversant la jante (1) via des alésages (7) qu'elle comporte et étant vissées au moyeu (2) en appliquant les bagues (11) contre la jante (1) par serrage (S1) axial, **caractérisé en ce que** lesdits organes de fixation (3) sont chacun conformes à un organe de fixation (3) relevant de l'une quelconque des revendications 1 à 7.

9. Véhicule automobile selon la revendication 8, **caractérisé en ce que** les calottes sphériques (10a) que comporte les têtes (12) de vis (4) des organes de fixation (3) sont au moins en partie logées à l'intérieur des calottes sphériques (10b) des bagues (11), les faces de conformation conique (11a) que comportent les bagues (11) étant logées par emboîtement à l'intérieur d'alvéoles (11b) respectives que comporte la jante (1) et qui présentent au moins une conformation conique de forme complémentaire à la conformation conique (11a) de la bague (11).

10. Véhicule automobile selon l'une quelconque des revendications 8 et 9, **caractérisé en ce que** le matériau de la jante est un matériau métallique indifféremment choisi parmi un quelconque matériau métallique.

## Patentansprüche

1. Befestigungselement (3) zum Festklemmen (S1) einer Radfelge (1) auf einer Nabe (2) eines Kraftfahrzeugs, wobei das Befestigungselement (3) mit im Wesentlichen axialer Ausdehnung (A2) eine Schraube (4) umfasst, die mit einem Kopf (12) zur axialen Abstützung gegen einen Ring (11) versehen ist, der um eine glatte Fläche (6) eines Schaftes (5) der Schraube (4) herum geschoben ist, wobei die glatte Fläche axial durch ein Außengewinde (8a) des Schaftes (5) der Schraube (4) verlängert ist, das sich an seinem distalen Ende erstreckt Gegenüberliegend zu dem Ring (11), der auf einer seiner Flächen eine teilweise sphärische Form und auf der anderen seiner Flächen eine konische Form aufweist, **dadurch gekennzeichnet, dass** die distale Fläche des Kopfes (12) der Schrauben (4) in einer sphärischen Kappe (10a) angeordnet ist, die durch Ineingriffnahme mit einer komplementär geformten sphärischen Kappe (10b) zusammenwirkt, die der Ring (11) auf seiner proximalen Seite aufweist, wobei die konische Formfläche (11a) des Rings (11) auf seiner distalen Seite in Form eines D-Organs ausgebildet ist Schachtelung mit konischer Reichweite.

2. Befestigungselement (3) nach Anspruch 1, **dadurch gekennzeichnet, dass**
- die Kugelkalotte (10a) des Schraubenkopfes (12) (4) eine männliche Kugelkalotte ist, die mit der Kugelkalotte (10b) des Ringes (11) zusammenwirkt, der eine weibliche Kugelkalotte ist, und
- die konische Formfläche (11a) des Ringes (11) ist am Umfang der distalen Seite des Ringes (11) als Steckerteil ausgebildet.

3. Befestigungselement (3) nach einem der vorhergehenden Ansprüche, **dadurch gekennzeichnet, dass** das Material des Rings (11) ein metallisches Material ist, das unabhängig aus irgendeinem metallischen Material ausgewählt ist.

4. Befestigungselement (3) nach einem der vorhergehenden Ansprüche, **dadurch gekennzeichnet, dass** die Mantellinie (G1) der konischen Formfläche (11a) des Rings (11) im Wesentlichen parallel zur Mantellinie (G2) der Kugelkalotte (10b) an der proximalen Fläche des Rings (11) ausgerichtet ist.

5. Befestigungselement (3) nach einem der vorhergehenden Ansprüche, **dadurch gekennzeichnet, dass** die axiale Erstreckung (E1) der Kugelkalotte (10b), die der Ring (11) aufweist, höchstens gleich der axialen Erstreckung (E2) der Kugelkalotte (10a) ist, die der Kopf (12) der Schrauben (4) aufweist.

6. Befestigungselement (3) nach einem der Ansprüche 2 bis 5, **dadurch gekennzeichnet, dass** die männliche Kugelkappe (10a), die der Kopf (12) der Schrauben (4) aufweist, axial zu ihrem proximalen Ende hin durch ein männliches Antriebsorgan (9) verlängert ist, dass die Schraube (4) in Drehung versetzt.

7. Befestigungselement (3) nach Anspruch 2 oder einem der Ansprüche 3 bis 6 in Abhängigkeit von Anspruch 2, **dadurch gekennzeichnet, dass** das proximale Ende der Kugelkappe (10a), die der Schraubenkopf (12) aufweist, mit der glatten Fläche (6) des Schraubenschaftes (5) (4) bündig ist, um den der Ring (11) geschoben ist.

8. Kraftfahrzeug mit Rädern, die jeweils an den jeweiligen Naben (2) über eine Vielzahl von Befestigungselementen (3) befestigt sind, die winkelmäßig um die Drehachse der Nabe (2) verteilt sind, wobei die Befestigungselemente (3) jeweils eine Schraube (4) aufweisen, um die ein Ring (11) geschoben ist, der sich axial gegen eine Felge (1) des Rades abstützt, wobei die jeweiligen Schrauben (4) der Befestigungselemente (3) die Felge (1) über Bohrungen (7), die sie aufweist, durchqueren und an der Nabe (2) durch Anlegen der Ringe (11) angeschraubt sind Felge (1) durch axiales Klemmen (S1), **dadurch gekennzeichnet, dass** die Befestigungsorgane (3) jeweils mit einem Befestigungsorgan (3) übereinstimmen, das unter einen der Ansprüche 1 bis 7 fällt.

9. Kraftfahrzeug nach Anspruch 8, **dadurch gekennzeichnet, dass** die Kugelkappen (10a), die die Köpfe (12) der Schrauben (4) der Befestigungsorgane (3) aufweisen, zumindest teilweise innerhalb der Kugelkappen (10b) der Ringe (11) angeordnet sind, wobei die konischen Formflächen (11a), die die Ringe (11) aufweisen, durch Einstecken in entsprechende Zellen (11b), die die Felge (1) aufweist, aufgenommen sind und die zumindest eine komplementäre konische Formgebung aufweisen die konische Form (11a) des Ringes (11).

10. Kraftfahrzeug nach einem der Ansprüche 8 und 9, **dadurch gekennzeichnet, dass** das Material der Felge ein metallisches Material ist, das unabhängig aus irgendeinem metallischen Material ausgewählt ist.

## Claims

1. Fastening member (3) arranged for tightening (S1) a wheel rim (1) on a motor vehicle hub (2), the fastening member (3) of overall axial extension (A2) comprising a screw (4) provided with a head (12) for axial bearing against a ring (11) threaded around a smooth face (6) of a rod (5) of the screw (4), said smooth face being extended axially by an external thread (8a) of said rod (5) of screws (4) extending at its distal end, the axially opposite faces of the ring (11) having at one of its said faces a partially spherical shape and at the other of its said faces a conical shape, **characterized in that** the distal face of the screw head (12) (4) is arranged in a spherical cap (10a) cooperating by fitting with a spherical cap (10b) of complementary shape that the ring (11) has at its proximal face, the conical shaping face (1 1a) of the ring (11) being arranged at its distal face in forming a member d The nesting with conical bearing surface.

2. Fastening member (3) according to claim 1, **characterized in that**:
- the spherical cap (10a) of the head (12) of the screw (4) is a male spherical cap cooperating by fitting with the spherical cap (10b) of the ring (11) which is a female spherical cap, and
- the conical shaping face (11a) of the ring (11) is formed at the periphery of the distal face of the ring (11) forming a male fitting member.

3. Fastening member (3) according to any one of the preceding claims, **characterized in that** the material of the ring (11) is a metallic material chosen from any metallic material.

4. Fastening member (3) according to any one of the preceding claims, **characterized in that** the generatrix (G1) of the conical shaping face (11a) of the ring (11) is oriented substantially parallel to the generatrix (G2) of the spherical cap (10b) formed on the proximal face of the ring (11).

5. Fastening member (3) according to any one of the preceding claims, **characterized in that** the axial extension (E1) of the spherical cap (10b) comprised in the ring (11) is at most equal to the axial extension (E2) of the spherical cap (10a) comprised in the screw (4) head (12).

6. Fastening member (3) according to any one of claims 2 to 5, **characterized in that** the male spherical cap (10a) comprised in the head (12) of the screw (4) is extended axially towards its proximal end by a member (9) for driving the screw (4) in rotation by a male member.

7. Fastening member (3) according to claim 2 or according to any one of claims 3 to 6, caught in the dependency of claim 2, **characterized in that** the proximal end of the male spherical cap (10a) comprised in the screw (4) head (12) is flush with said smooth face (6) of the screw (4) rod (5) around which the ring (11) slips.

8. Motor vehicle provided with wheels each fixed to respective hubs (2) via a plurality of fixing members (3) which are angularly distributed around the axis of rotation of the hub (2), the fixing members (3) each comprising a screw (4) around which is threaded a ring (11) bearing axially against a rim (1) comprised in the wheel, the respective screws (4) of the fixing members (3) passing through the rim (1) via bores (7) comprised therein and being screwed to the hub (2) by applying the rings (11) against the rim (1) by axial clamping (S1), **characterized in that** the said fixing members (3) are each in accordance with a fixing member (3) pertaining to any one of claims 1 to 7.

9. Motor vehicle according to claim 8, **characterized in that** the spherical caps (10a) comprised in the screw (4) heads (12) of the fastening members (3) are at least partially housed inside the spherical caps (10b) of the rings (11), the conical-shaped faces (11a) comprised in the rings (11) being housed by nesting inside respective cells (11b) comprised in the rim (1) and which have at least one conical shape complementary to the conformation conical (11 a) of the ring (11).

10. Motor vehicle according to either of claims 8 and 9, **characterized in that** the material of the rim is a metallic material chosen equally well from any metallic material.
